# EUROPEAN PATENT APPLICATION

(11) **EP 1 187 051 A1**
(43) Date of publication of application: **13.03.2002**
(21) Application number: 01307250.9
(22) Date of filing: 28.08.2001
(51) Int. Cl.: G06F 17/60

(54) **Marketing support system for mechanical components**

(30) Priority: 08.09.2000 JP 2000273730
(71) Applicant: NTN CORPORATION, Osaka-shi, Osaka-fu (JP)
(72) Inventor: Takahashi, Yutaka, c/o NTN Corporation, Osaka-shi, Osaka-fu (JP); Iguchi, Kouhei, c/o NTN Corporation, Osaka-shi, Osaka-fu (JP)
(74) Representative: Freed, Arthur Woolf

(57) **Abstract**

A supplier for supplying mechanical components supports aggressively the business activity of the sales agency over the Internet, thereby promoting the sales activity of the agency while making use of the function of the agency and improving customer services as well. A communication device of a supplier connected to an open network such as the Internet is provided with technical information service means for allowing a purchaser having accessed thereto to select a mechanical component and with means for introducing to the purchaser the sales agency that sells the selected mechanical component. A communication device of the sales agency connected to the open network is provided with means for performing processing electronically such as price quotation for inquiry, acceptance of orders, payment reclaim, and delivery.

## Description

### BACKGROUND OF THE INVENTION

### 1. Field of the Invention

The present invention relates to a system for receiving and placing an order over an open network for sliding bearings and mechanical components having rolling elements such as rolling bearings and ball screws, which are hereinafter simply referred to as mechanical components in general. The system allows a company manufacturing and selling the mechanical component (hereinafter referred to as a supplier), a sales agency, and a customer (including a repeat customer and a new customer and hereinafter referred to as a purchaser) to communicate with each other over an open network typified by the Internet. Accordingly, the system is intended to thereby promote sales activities and improve the efficiency of business and customer services.

### 2. Description of the Related Art

In general, it is customary for sales agencies to sell mechanical components such as the rolling bearing, the sliding bearing, and the ball screw to general purchasers (who are meant to be those other than large-volume customers). This is because of the following situations. That is, mechanical components of this type are available in abundance for a wide variety of uses, and a high degree of technical information is required to select mechanical components suitable for service conditions. Accordingly, sales agencies are individually best in closer touch with the purchaser. For example, rolling bearings include a wide variety of types, models, and sizes. It is therefore very important to select the most suitable bearing in order to make full use of a machine or device as expected. To select bearings, it is necessary to analyze many factors and then study and evaluate the results from various aspects.

Incidentally, already known are closed networks which are established by connecting between a sales agency and a supplier over a dedicated communication line in order to electronically receive or place orders between the two parties.

In the closed network for connecting between a supplier and a sales agency, there is a problem that the dedicated line employed for this purpose requires a significant capital investment and a large amount of running cost. In addition, the network is intended only to support business and does not allow the supplier to support sales activities of a sales agency. Accordingly, an increase in sales depends entirely on the sales effort made by the sales agency.

Furthermore, suppose that a purchaser comes across a technical question about the selection of mechanical components upon designing a new machine. In this case, it is customary for the purchaser to convey the question to a responsible sales person of the supplier via a sales agency. Then, a responsible engineer of the supplier goes out all the way to the purchaser to give an answer to the question or advice to the purchaser. This would require a considerable amount of time to select mechanical components, and thus the customer was possibly provided with insufficient services.

### SUMMARY OF THE INVENTION

It is therefore an object of the present invention to provide a system at low costs which makes use of an open network to allow a supplier to directly provide technical information for a purchaser, thereby making it possible to support sales activities of a sales agency. It is another object of the present invention to provide sufficient services for the purchaser by promptly providing technical information for the purchaser.

A marketing support system according to a first aspect of the present invention allows a supplier, manufacturing and selling a mechanical component such as one having a rolling element and a sliding bearing, to support a sales activity of a sales agency selling the mechanical component. The system includes a supplier's communication device which is connected to an open network and which is provided with technical information service means for providing technical information required to select the mechanical component and sales agency introduction means for introducing a sales agency selling the mechanical component. The system also includes a sales agency's communication device which is connected to the open network and which is provided with order processing means for taking an order for the mechanical component from a purchaser and for electronically performing processing such as order acceptance, payment reclaim, and delivery. The system allows the purchaser to gain access to the communication device of the supplier over the open network so that the purchaser can select and purchase a mechanical component.

A purchaser who has gained access to the home page of a supplier is provided with technical information useful for selecting a mechanical component and informed of a sales agency selling the mechanical component at the same time. This allows the provision of technical information to be directly connected to winning an order for mechanical components, thus making it possible to promote the sales activity of sales agencies through supplier's support for agencies. This serves to make full use of current marketing channels and thereby makes it possible to provide more business opportunities in the commercial market. On the other hand, a nationwide sales agency network is introduced to purchasers and thereby services are provided for the purchaser in closer touch with the region. In addition, purchasing mechanical components of this type usually involves consultations on their selection. The present invention provides technical information useful for the selection, thereby making it possible for the purchaser to select desired mechanical components on the spot. This facilitates the selection of mechanical components and gives purchasers an introduction to a sales agency, thereby making it possible for the purchaser to purchase mechanical components without going through complicated procedures.

Furthermore, the utilization of existing sales agencies serves to make use of their logistics infrastructure, resulting in distributed inventory and prompt positive delivery.

The marketing support system for a mechanical component according to a second aspect of the present invention is characterized in that the purchaser selects a responsible sales agency.

The marketing support system for a mechanical component according to a third aspect of the present invention is characterized in that the supplier selects a responsible sales agency.

The marketing support system for a mechanical component according to a fourth aspect of the present invention is characterized as follows. That is, the communication device of the supplier is provided with means for receiving an inquiry for a mechanical component from the purchaser. In addition, the contents of the inquiry is distributed over the open network and thereby consigned to an appropriate sales agency determined in accordance with a region and a product number. Furthermore, the sales agency performs processing such as payment reclaim and delivery of the mechanical component.

The marketing support system for a mechanical component according to a fifth aspect of the present invention is characterized as follows. That is, the technical information service means is provided with question reply means for receiving a technical question from the purchaser and allowing a responsible engineer of the supplier to send a reply to the question back to the purchaser. The purchaser can make technical questions on mechanical components directly to a responsible engineer of the supplier. This allows the purchaser to promptly obtain the most suitable technical information, thus making it possible to provide improved services and sales promotion to the purchaser. The replies to questions include advice and consultations. For example, means for transmitting and receiving those questions and replies include E-mail.

The marketing support system for a mechanical component according to a sixth aspect of the present invention is characterized as follows. That is, the sales agency introduction means is to display a sales agency information list having display items such as a sales agency name, a mechanical component to be handled, an address, and a place for contact. A sales agency is introduced to the purchaser on the home page of the supplier. This makes it possible for the purchaser, who has selected a mechanical component based on the offered technical information, to make an inquiry to the sales agency or place an order with the agency on the spot. In this case, various ways of introducing sales agencies are conceivable. For example, for a repeat customer already having business contacts with a sales agency in the past, it may be simply sufficient to introduce to the customer the sales agency who has had a business transaction with the customer. For new transactions, sales agency networks including information such as the name of each sales agency, the address, and the place of contact can be displayed in a list to allow purchasers to select sales agencies by themselves. The address of a sales agency can be displayed in association with map information. On the other hand, the supplier may take the initiative in selecting and introducing the nearest sales agency to the address of the purchaser. Alternatively, the supplier may introduce the most skilled sales agency in handling the mechanical component that the purchaser intends to purchase or the sales agency that carries the largest amount of the mechanical components in stock. It is also possible for the purchaser to select, from among a plurality of sales agencies, a sales agency that best satisfies the purchaser with delivery and/or price. Furthermore, means for making an inquiry to sales agencies is provided irrespective of whether or not the inquiry is directly related to the purchase of a mechanical component, and customer services are thereby improved.

A marketing support system for a mechanical component according to a seventh aspect of the present invention is adapted that the mechanical component is delivered after payment has been made. This saves time and effort for providing credit to the customer and thereby makes it possible to make a prompt delivery.

A marketing support system for a mechanical component according to an eighth aspect of the present invention is adapted as follows. That is, an ID is issued for the inquiry from the purchaser when credit can be provided for the purchaser in accordance with background checks on the purchaser and an order from the purchaser is accepted in accordance with the ID. An ID is issued in accordance with background checks on the purchaser, thereby making it possible to save time and effort in both the purchaser and the sales agency.

A marketing support system for a mechanical component according to a ninth aspect of the present invention is adapted as follows. That is, the inquiry from the purchaser is registered to a customer database and an order potential database. This allows the sales agency to control customers and thereby receive orders appropriately. Furthermore, this also allows the supplier to have all pieces of customer information, thereby making it possible to provide more exacting services for customers in accordance with purchase history of each customer or the like.

The nature, principle, and utility of the invention will become more apparent from the following detailed description when read in conjunction with the accompanying drawings in which like parts are designated by like reference numerals or characters.

### BRIEF EXPLANATOIN OF THE DRAWINGS

In the accompanying drawings:
Fig. 1 is a conceptual view illustrating the entire image of a system according to the present invention;
Fig. 2A is a partially exploded perspective view illustrating a deep groove ball bearing;
Fig. 2B is a partially exploded perspective view illustrating an angular contact ball bearing;
Fig. 2C is a partially exploded perspective view illustrating a ball screw;
Fig. 3A is a partially exploded perspective view illustrating a cylindrical roller bearing;
Fig. 3B is a partially exploded perspective view illustrating a needle roller bearing;
Fig. 3C is a partially exploded perspective view illustrating a tapered roller bearing;
Fig. 3(D) is a partially exploded perspective view illustrating a spherical roller bearing;
Fig. 4 is a partially exploded perspective view illustrating a bearing unit;
Fig. 5 is a flowchart illustrating part of the procedure of the system according to the present invention, showing the steps of selection, inquiry, order placement, delivery, and financial settlement;
Fig. 6 is a flowchart illustrating part of the procedure of the system according to the present invention, showing the steps of selection, inquiry, order placement, delivery, and financial settlement;
Fig. 7 is a flowchart illustrating part of the procedure of the system according to the present invention, showing the steps of selection, inquiry, order placement, delivery, and financial settlement;
Fig. 8 is a view illustrating a menu screen on the home page of a supplier;
Fig. 9 is a view illustrating a menu screen for providing technical information for selecting bearings;
Fig. 10 is a view illustrating an order placement screen;
Fig. 11 is a view illustrating a page for introducing sales agencies;
Fig. 12 is a view illustrating a page for precautions on bearing selection;
Fig. 13 is a flowchart for selecting bearings;
Fig. 14 is a view illustrating a screen for down load services;
Fig. 15 is a view illustrating a screen for narrowing down candidates upon selection of bearings; and
Fig. 16 is a view illustrating a menu screen for a technical FAQ list.

### DETAILED DESCRIPTION OF THE PREFERRED EMBODIMENTS

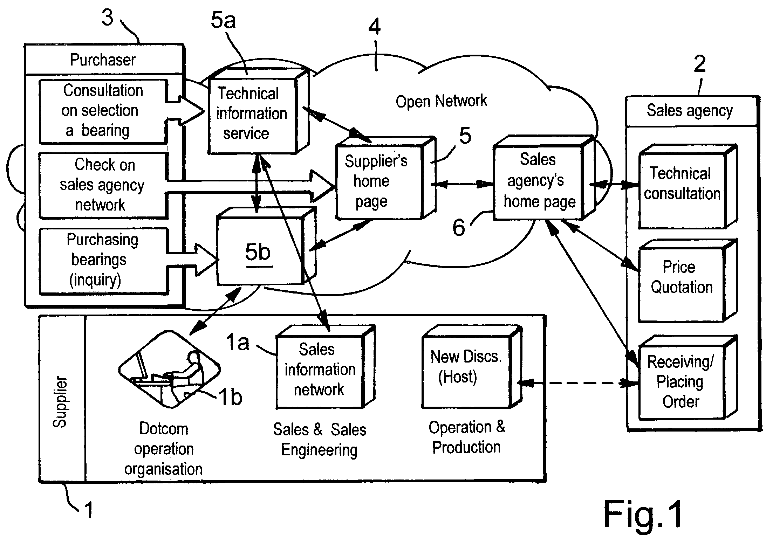

Fig. 1 illustrates the entire image of a marketing support system for mechanical components according to the present invention. In this system, a supplier 1 of mechanical components, a sales agency 2, and a purchaser 3 are interconnected to an open network 4 such as the Internet to allow the supplier 1 to support aggressively sales activities of the sales agency 2, thereby promoting the sales activity of the agency and improving customer services as well.

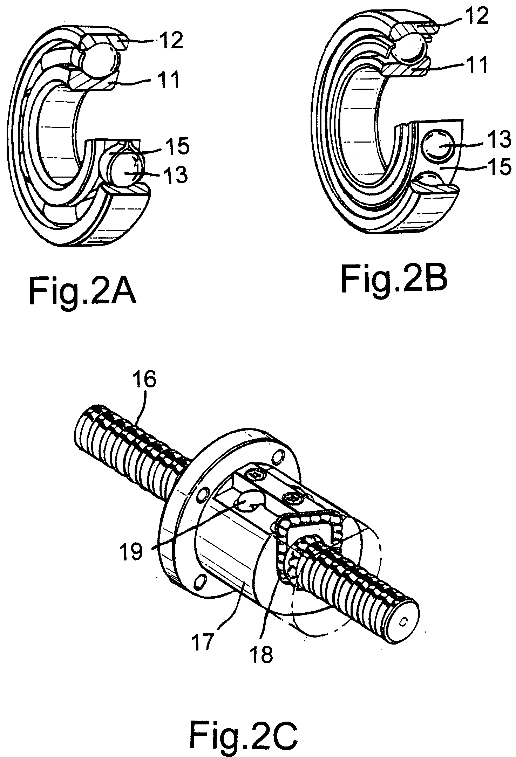

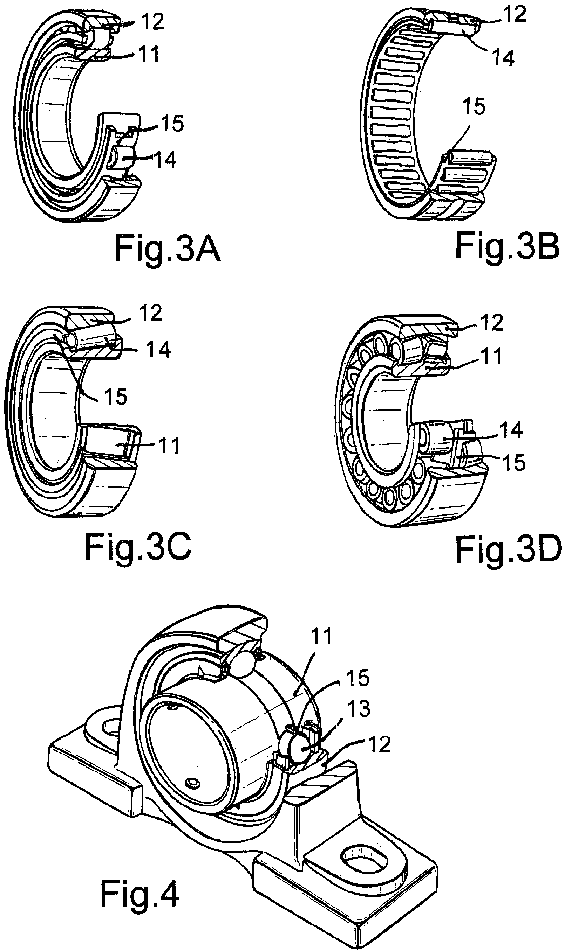

Here, among mechanical components, those having rolling elements typically include a ball bearing (Figs. 2A and (B)) employing balls as rollers, a ball screw (Fig. 2C), and a roller bearing (Figs. 3A-3(D)) employing rollers as rolling elements. Also included is a bearing unit (Fig. 4) into which a ball bearing and a bearing box are combined. Generally, a sliding bearing has little difference in basic form from those mentioned above and is therefore not illustrated. In general, as illustrated in Figs. 2A, 2B, 3A-3(D), and 4, the roller bearing includes bearing rings (an inner ring 11 and an outer ring 12), rolling elements (a ball 13 or a roller 14), and retainers 15. That is, several rolling elements (13 or 14) are disposed in between the inner ring 11 and the outer ring 12. Moreover, the rolling elements are regularly spaced by means of the retainers 15 so as not to contact with each other in order to accomplish smooth rolling movements. Incidentally, Fig. 2A exemplifies a deep groove ball bearing and Fig. 2B exemplifies an angular contact ball bearing. For the roller bearing, as shown in Figs. 3A-3(D), the roller 14 takes generally the form of a cylindrical roller (Fig. 3A), a needle roller (Fig. 3B), a tapered roller (Fig. 3C), or a spherical roller (Fig. 3(D)) according to their shape. Fig. 2C illustrates a return tube ball screw which has balls 18 as rolling elements disposed between a screw axis 16 and a nut 17, with the nut 17 being provided with a circulating path for the ball 18 or a return tube 19 in this case.

Fig. 1 is a conceptual view illustrating main functions of this system, in which a communication device 5 of the supplier 1 and a communication device 6 of the sales agency 2 are connected to the open network 4. For example, the communication device 5 of the supplier 1 is intended to open and run a home page on the Internet. The home page is provided with the display of a menu for selecting and starting up the following means as necessary. The means include technical information service means 5a for providing useful technical information for the purchaser 3 upon selecting mechanical components, purchase acceptance means 5b made available to the purchaser 3 for the purchase of mechanical components, and sales agency introduction means for introducing sales agencies.

The supplier 1 has a section for supporting the communication device 5. That is, the technical information service means 5a is connected to a sales information network 1a of the supplier 1, thereby allowing access to necessary information from outside. A full-time consultant is assigned to the section to offer technical consultations. The consultant receives technical inquiries by E-mail from the purchaser 3 and/or the sales agency 2 and then gives a reply to the inquires, expanding and updating technical information as well.

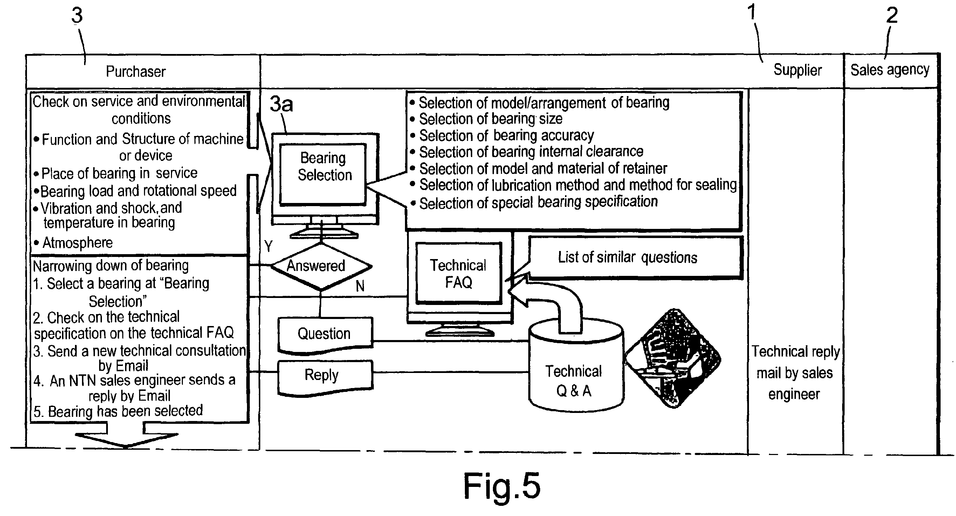

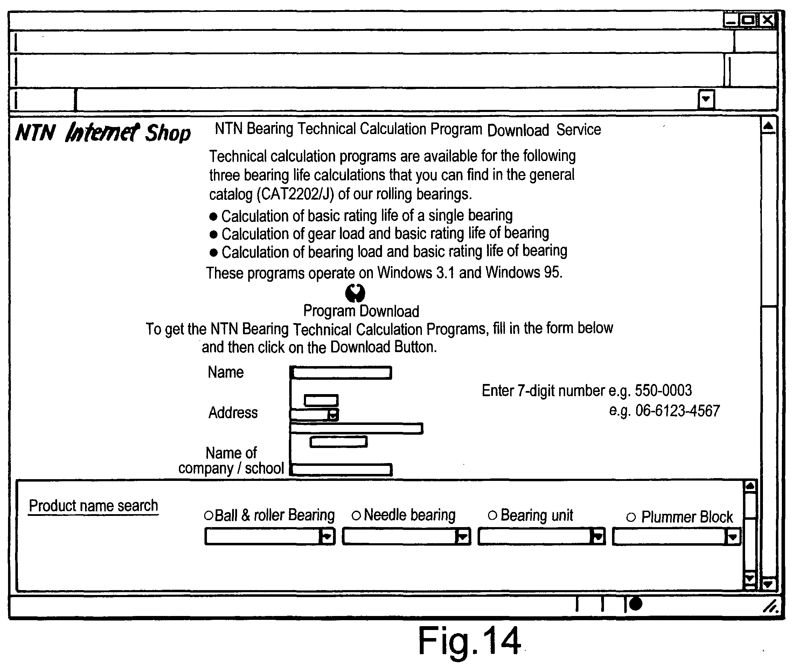

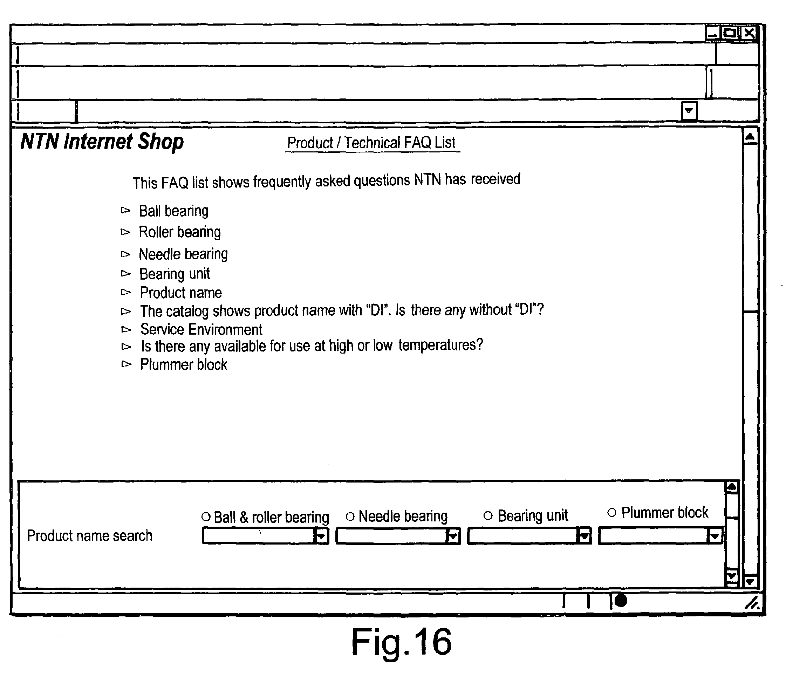

The technical information service means 5a provides various services made available to the purchaser 3 in addition to information for selecting mechanical components. More specifically, the services include the following pages provided in a menu which are opened by selecting the corresponding item. The pages include a technical FAQ page (see Figs. 5 and 16) which has sorted and summarized frequently-asked questions. Also included is a technical Q&A page where questions that have not been solved by consulting the technical FAQ page and a new technical consultation are received by E-mail, and then a sales engineer sends a technical reply mail (see Fig. 5). Also included are a questionnaire page for conducting surveys by questionnaires to thereby obtain customer information, a publication page for releasing catalog information on mechanical components, a page for downloading equations or the like that are required for selection of mechanical components (see Fig. 14), and a registration acceptance page for subscribing to mail magazines that are periodically issued.

A dedicated dotcom operation organization 1b is responsible for the purchase acceptance means 5b, and a full-time person is also assigned to this organization in order to reply promptly to a business inquiry that follows the selection of a mechanical component.

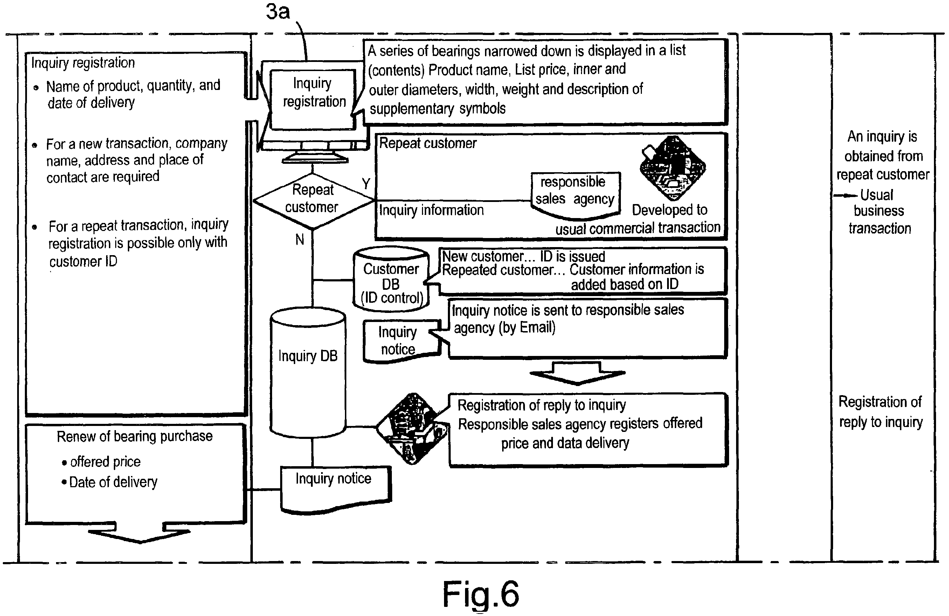

Now, a series of steps of selection, inquiry, order placement, delivery, and financial settlement is described below in accordance with a rolling bearing as a typical example of mechanical components with reference to the flowchart shown in Fig. 1 and 5 to 7. Figs. 5 to 7 should have been illustrated in one drawing by successively joining the figures together at the chain lines but are separated as such for purposes of illustration. In Figs. 5 to 7, the column to the left expresses the activities of the purchaser 3, the one to the right expresses those of the sales agency 2, and the two columns in the center express mainly the activities of the supplier 1. Incidentally, a communication terminal 3a appearing in each of Figs. 5 to 7 belongs to the purchaser 3.

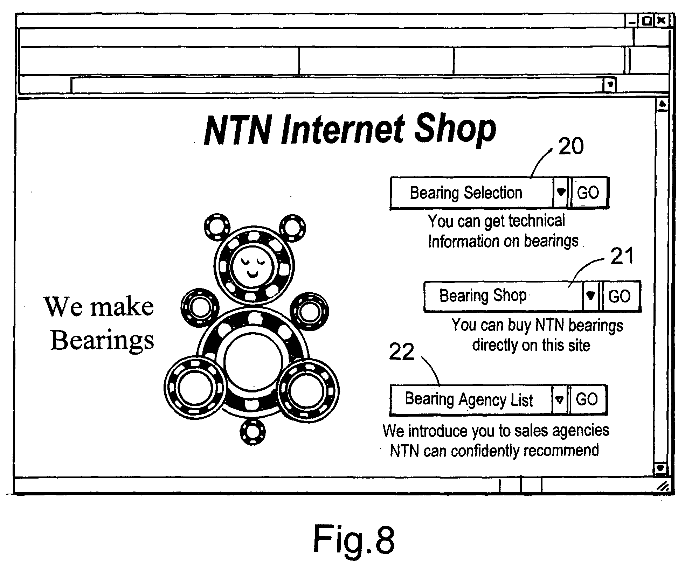

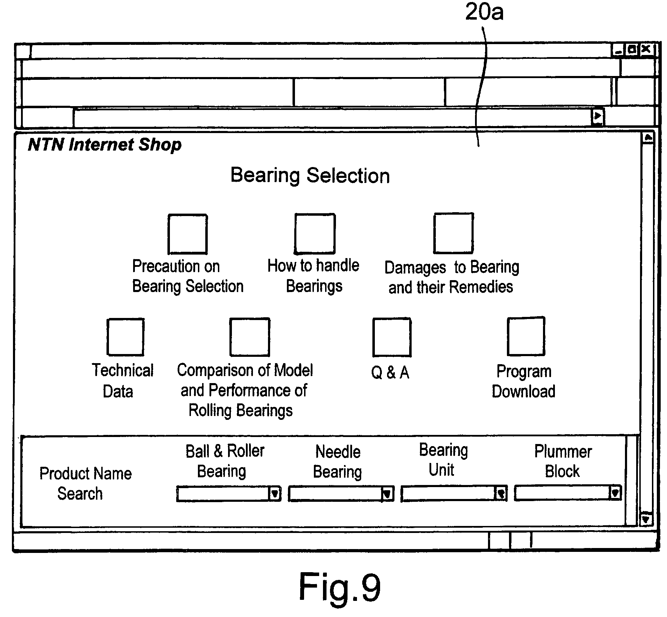

The purchaser 3 of mechanical components operates his or her own communication terminal 3a to obtain access to the communication device 5 of the supplier 1 over the open network 4. Then, the home page of the supplier 1 appears as shown in Fig. 8. This home page is a menu-type screen on which a selection can be made as necessary from three menus such as "Bearing Selection" 20, "Bearing Shop" 21, and "Bearing Agency List" 22. Clicking on the "Bearing Selection" 20 allows access to the technical information service means 5a related to the selection of mechanical components. This causes a screen 20a as shown in Fig. 9 to appear. For convenience purposes, this technical information service will be described later in detail.

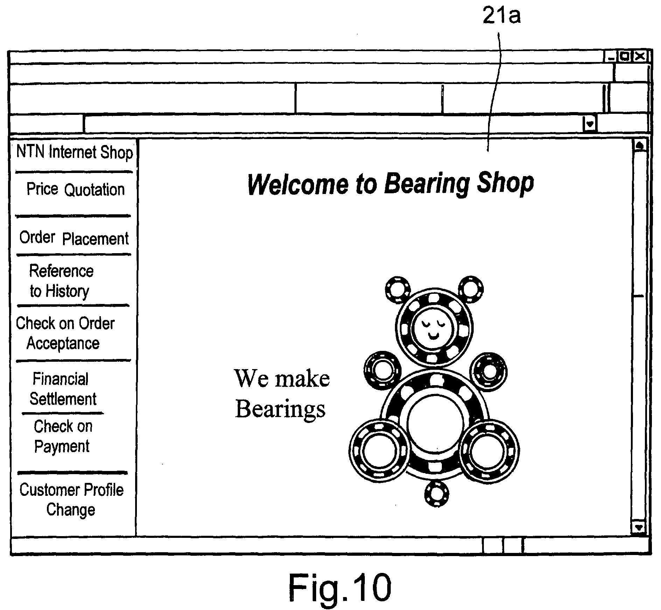

When the purchaser 3 has identified his or her desired mechanical component, the "Bearing Shop" 21 can be clicked to gain direct access to the purchase acceptance means 5b. This causes an order placement screen 21a to appear as shown in Fig. 10. In general, after a selection has been made, an inquiry registration is made (Fig. 5) on the order placement screen 21a of Fig. 10. The inquiry registration is made by recording and then transmitting the name of a product, the quantity, and the date of delivery. Incidentally, for a new transaction, the name of the company, the address, and the place of contact are additionally required to register, however, for a repeat transaction, it is required to enter only the customer ID. For this reason, in an inquiry registration, it is determined whether or not the customer is a repeat customer. Then, for a repeat customer, the inquiry information is distributed to a responsible sales agency to develop a daily commercial transaction. For a new customer, the customer is registered to a customer database and an inquiry database as well as the ID is issued. A suitable sales agency 2, which is determined based on the region and the product number, is informed of this inquiry that is distributed over the open network. The informed sales agency 2 registers the offering price, the date of delivery and the like to the inquiry database. The registered contents are transmitted to the purchaser 3 as a reply to the inquiry.

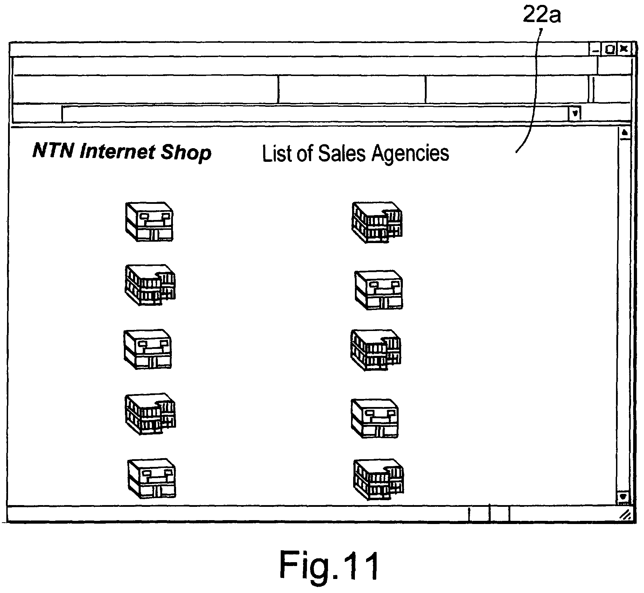

Incidentally, the supplier 1 can take the initiative in selecting a responsible sales agency 2 as described above. Alternatively, the purchaser 3 can select the sales agency 2 by themselves. In this case, back on the home page of the supplier 1 (Fig. 8), the "Bearing Agency List" 22 is clicked to display a sales agency introduction page 22a as shown in Fig. 11. In the illustrated example, displayed in icons are a plurality of sales agencies with their names, and clicking on a given icon allows detailed information on the sales agency to appear. More specifically, displayed are the name, the mechanical components to be handled, the address, place of contact and the like. The purchaser 3 selects the desired sales agency 2 on the sales agency introduction page 22a and then connects to the communication device of the sales agency 2 or the communication device 6 in this case. This makes it possible for the purchaser 3 to make an inquiry to the sales agency 2 to go through the procedure such as price quotations, thereby placing an order with the sales agency 2.

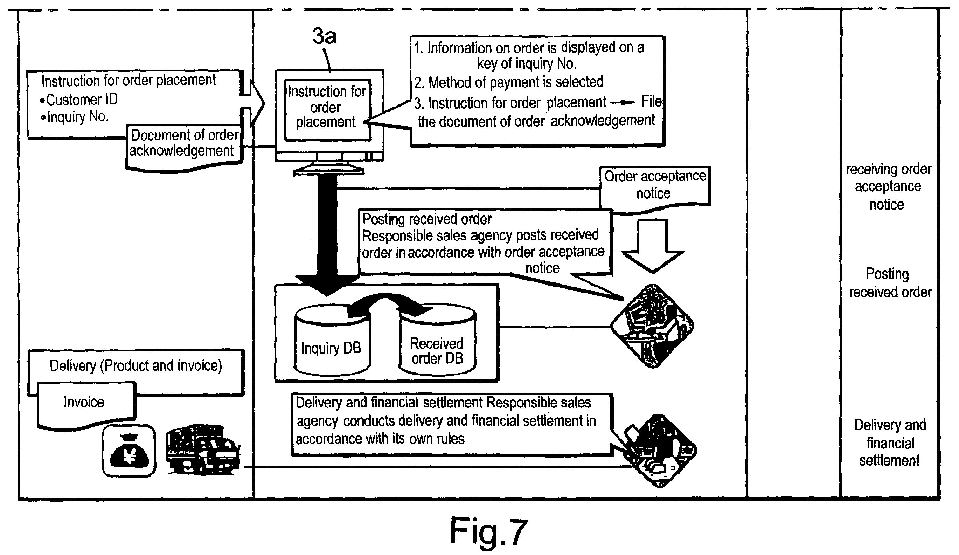

Having agreed with the contents of the inquiry reply, the purchaser 3 enters the customer ID and the inquiry No. to thereby instruct the placement of the order (Fig. 7). In accordance with the instruction of the order placement, the supplier 1 transmits an order acknowledgement document to the purchaser 3 and an order acceptance notice to the responsible sales agency 2. At the same time, the contents is transferred from the inquiry database to an order acceptance database. The responsible sales agency 2 posts the received order in accordance with the order acceptance notice. The responsible sales agency 2 makes delivery and financial settlement in accordance with its own rules. For example, the rules include the cases where the mechanical component is delivered after the payment has been made or only when received is an order with an ID which is issued only when credit can be provided for the customer in accordance with background checks on the customer.

The purchaser 3 can also make a direct inquiry on the communication device 5 of the supplier 1. For this inquiry, the purchaser 3 opens, for example, the purchase acceptance means 5b or the order placement screen of the menu in the home page of the supplier 1 (Fig. 8). This inquiry is processed at the dotcom operation organization 1b provided for the supplier 1. This allows the supplier 1 to consign this inquiry according to the contents thereof to an appropriate sales agency 2, which is determined by the region, the product number or the like, through the distribution over the open network 4. Accordingly, the sales agency 2 is to perform processing such as price quotation, payment reclaim, delivery of mechanical components and the like.

The foregoing description is given assuming that the purchaser is connected to the Internet or an open network through a personal computer. However, the communication means can include a small radio communication device such as a mobile telephone available for the i-mode. In this case, only a small display screen is available and therefore limited use is made of the device such as for inquiry and order placement.

Now, the technical information service for selecting mechanical components is described in accordance with the rolling bearing taken as a typical example of mechanical components with reference to Fig. 5 and Figs. 12 to 16.

As described above, access is gained to the home page of the supplier 1 and the "Bearing Selection" 20 is clicked in the menu screen (Fig. 8), thereby allowing the screen 20a of the "Bearing Selection" to appear as shown in Fig. 9. As illustrated, displayed on this screen are menu items such as "Precautions on Bearing Selection", "How to handle Bearing", "Damages to Bearing and their remedies", "Technical Data", "Comparison of Model and Performance of Rolling Bearing", "Q&A", and "Program Download".

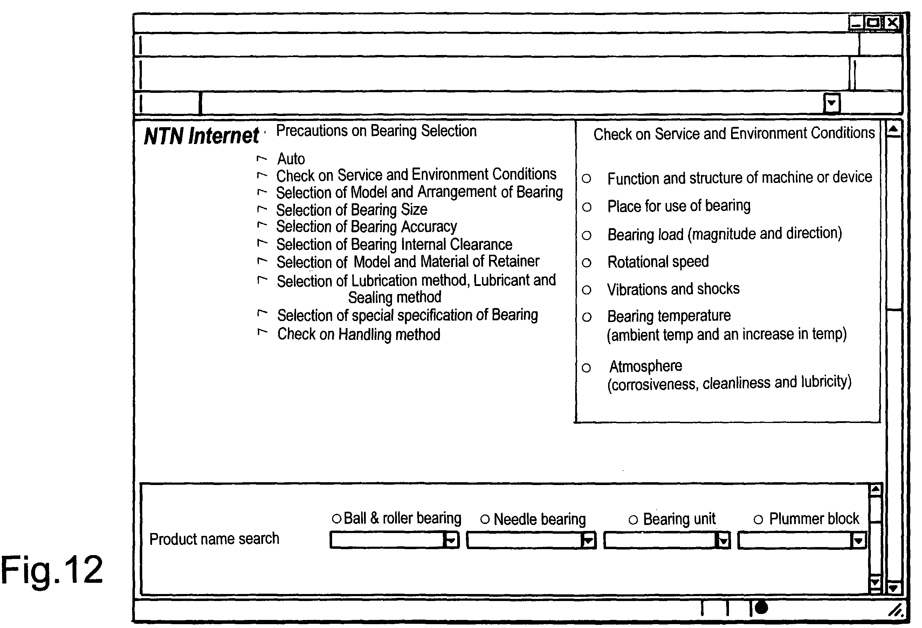

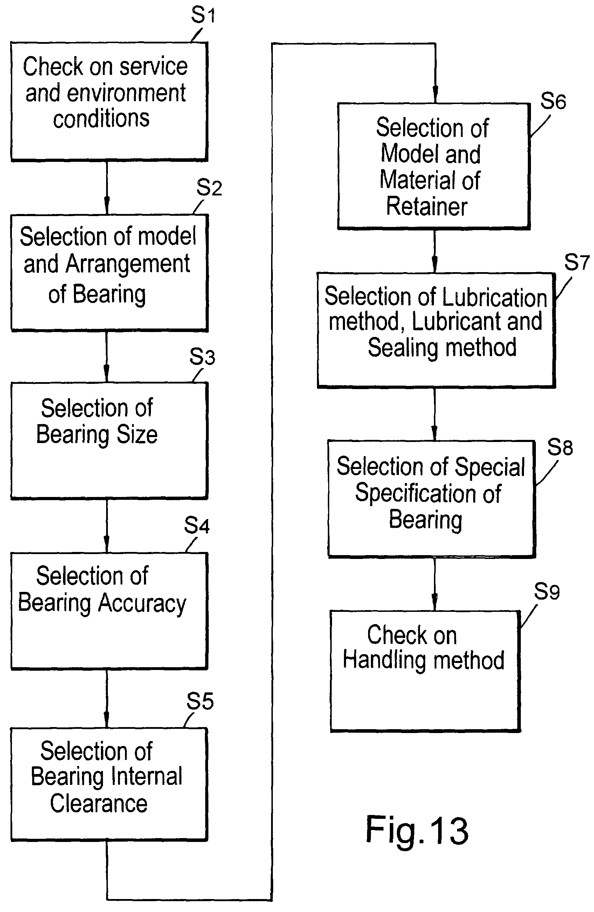

Clicking on "Precautions on Bearing Selection" causes the screen to appear as shown in Fig. 12. This screen displays each item of the general procedure for selecting bearings shown in the flowchart of Fig. 13, each item having its own lower layers. In this display format, the technical information systematized for the selection of bearings is arranged in a tree structure, thereby allowing the purchaser 3 to take a thorough look at the information without losing the entire flow shown in Fig. 13.

The first step S1 in the flowchart of Fig. 13 is "Check on Service and Environment Conditions". Clicking on "Check on Service and Environment Conditions" displayed on the screen of Fig. 12 causes the following items to appear as the conditions required for selection. The items include the function and structure of the machine or device, place of the bearing in service, bearing load (magnitude and direction), rotational speed, vibrations and shocks, bearing temperature (ambient temperature and an increase in temperature), and atmosphere (corrosiveness, cleanliness, and lubricity). This display allows the purchaser to check to see if he or she has understood all the conditions required upon selection of bearings.

The following step S2 is "Selection of Model and Arrangement of Bearing". Clicking on "Selection of Model and Arrangement of Bearing" on the screen of Fig. 12 causes this step to start up. The contents include "Allowable Space for Bearing", "Bearing Load (magnitude, direction, and presence or absence of vibration and shock)", "Rotational Speed", "Rotational Accuracy", "Rigidity", "Tilt of Inner and Outer Rings", "Torque", "Arrangement of Bearing (movable and stationary sides)", "Mounting or Dismounting", and "Marketability and Cost Efficiency".

An item of "Allowable Space for Bearing" is to know, based on the structure of the machine or device, the space allowed for the placement of the bearing, thereby serving for size-wise selection of the bearing model. In general, the space allowed for a bearing is restricted and determined based on the diameter of the shaft or the inner diameter of the bearing in the design of the machine or the device. Therefore, the model and size of a bearing is determined with reference to the inner diameter of the bearing. For this reason, all dimension tables are based on the inner diameter. There exist many standardized bearing models and a series of sizes for bearings, from which the optimum bearing model and size can be selected.

An item of "Bearing Load (magnitude, direction, and presence or absence of vibration and shock)" is to allow the bearing model to be selected based on the bearing load. The load acting upon the bearing provides a quite wide variety of magnitudes, directions, and properties. It is possible to determine this bearing load by clicking "Program Download" on the "Bearing Selection" screen shown in Fig. 9 to download a program for calculating the bearing load. Fig. 14 exemplifies a screen to be opened for this purpose. In general, the basic rating load provided in the dimension table of a bearing indicates the load capacity. However, the bearing model is determined in consideration of whether the load acting upon the bearing involves only a radial load or a load combined with the axial load. For the same series of sizes, the roller bearing has an advantage over the ball bearing in load capacity and in vibration and shock resistance.

An item of "Rotational Speed" is to check to see if the bearing selected meets service conditions. The allowable rotational speed of a bearing depends on the model of the bearing, the size, the accuracy, the type of the retainer, the load, the lubrication condition, and the cooling condition. In consideration of this, the item is selected to display data to carry out the check. An increase in the rotational speed of a bearing would cause an increase in temperature of the bearing due to frictional heat generated inside the bearing, resulting in damage such as sticking. Accordingly, it is made impossible for the bearing to operate in the stable state. The allowable rotational speed (rpm) is a limit rotational speed at which the bearing is allowed to operate generating heat without exceeding an allowable amount, and depends on the model of the bearing, the size, the type of the retainer, the load, the lubrication condition, the cooling condition and the like. The bearing dimension table includes a guideline along which the allowable rotational speed can be determined for grease- and oil-lubricated bearings. In general, suitable for high-speed applications are the models of bearings such as the deep groove ball bearing, the angular contact ball bearing, and the cylindrical roller bearing.

The "Rotational Accuracy" provides for the deflection caused upon rotation of the bearing, indicating the allowable value of radial deflections of the inner and outer rings, axial deflections, transverse deflections of the inner ring, and deflections of the outer surface of the outer ring. The ISO and JIS standards provide for the dimensional accuracy of the bearing and the rotational accuracy. Machines or devices that require high deflection accuracy of the rotational shaft or rotate at high speeds employ bearings of accuracy class 5 or more. The models of bearings of high rotational-accuracy include the deep groove ball bearing, the angular contact ball bearing, and the cylindrical roller bearing.

An item of "Rigidity" is to be taken into account as a condition for selecting the model of a bearing. This is because a load acted upon the bearing causes an elastic deformation in the contact portion between the rolling element and the rail surface, and the deformation needs to be made as small as possible for some machines or devices. For the model of bearings, the roller bearing provides less deformation than the ball bearing. It is also possible to employ a method for applying a load in advance to the bearing to allow the pre-load to provide an increase in rigidity of the shaft assembly. Suitable for this method are the deep groove ball bearing, the angular contact ball bearing, and the tapered roller bearing. In this context, these are displayed as a piece of information for selecting bearings.

An item of "Tilt of Inner and Outer Rings" is to check the allowable tilt of a bearing. In some cases, a deflection in bearing shaft, the machining accuracy of the shaft and the housing, and an assembly error cause a tilt to some extent between the inner and outer rings of the bearing. In the presence of a significant tilt, suitably employed are self-aligning bearings such as the self-aligning ball bearing, the self-aligning roller bearing, or the ball bearing unit. The allowable tilt depends on the model of the bearing, the load acted thereupon, and the inner clearance of the bearing. However, since the tilt may cause loss of life and damage to the retainer, the allowable degree of tilt that should be followed for general applications is displayed for each bearing model.

An item of "Torque" provides a torque required for the friction of a bearing. In particular, the deep groove ball bearing and the cylindrical roller bearing are suitable for machines or devices that require a low torque. In this context, a list of frictional coefficients is displayed for various bearings.

An item of "Arrangement of Bearing (movable and stationary sides)" is to serve for the selection of bearing arrangement. In general, the shaft is supported with two bearings in the radial and axial directions. In this arrangement, the stationary side bearing is to prevent the shaft and the housing from being displaced relative to each other in the axial direction. On the other hand, the movable side bearing is to allow the relative displacement in the axial direction. This arrangement allows contractions and expansions of the shaft caused by variations in temperature to be released and makes it possible to reduce a spacing error of the bearing installed. In this context, typical arrangement examples are displayed in conjunction with their features and examples of their use. Included here are the case of distinguishing between the stationary and the movable sides and the case in which the stationary and the movable sides are not distinguished.

An item of "Mounting or Dismounting" is displayed to indicate various precautions upon mounting and dismounting bearings. This is because the rolling bearing is a precision component in comparison with general mechanical components, and the rolling bearing requires a careful and delicate handling to maintain the precision thereof. The precautions include that the cylindrical roller bearing, the needle roller bearing, and the tapered roller bearing, which are provided with separable inner and outer rings, are suitable for machines or devices having a bearing frequently mounted or dismounted for periodic inspections or repairs. Also included is that the self-aligning ball bearing and the self-aligning roller bearing, which are provided with a tapered hole, can be easily mounted or dismounted using an adapter sleeve.

An item of "Marketability and Cost Efficiency" is to display the availability of a bearing and the price and thus made available for information upon selecting bearings.

In the flowchart of Fig. 13, step S3 is "Selection of Bearing Size". In this step, clicking "Selection of Bearing Size" on the "Precautions on Bearing Selection" screen shown in Fig. 12 causes a menu screen to appear which includes items such as the design life of machines or devices, dynamic and static equivalent loads, safety factors, allowable rotational speeds, allowable axial loads, and allowable spaces. On the menu screen, each of the items is displayed to be checked against the condition provided by the customer, thereby allowing the customer to select the size of the bearing.

In the flowchart of Fig. 13, step S4 is "Selection of Bearing Accuracy". In this step, clicking "Selection of Bearing Accuracy" on the "Precautions on Bearing Selection" screen shown in Fig. 12 causes a menu screen to appear which includes items such as the deflection accuracy of rotational shafts, rotational speeds, and variations in torque. On the menu screen, each of the items is displayed to be checked against the condition provided by the customer, thereby allowing the customer to select the bearing accuracy.

In the flowchart of Fig. 13, step S5 is "Selection of Bearing Internal Clearance". In this step, clicking "Selection of Bearing Internal Clearance" on the "Precautions on Bearing Selection" screen shown in Fig. 12 causes a menu screen to appear which includes items such as shafts, materials and shapes of the housing, classes of fit, difference in temperature between inner and outer rings, tilt of inner and outer rings, load (magnitude and property), preload, and rotational speed. On the screen, each item is displayed to thereby allow the customer to select a bearing internal clearance.

In the flowchart of Fig. 13, step S6 is "Selection of Model and Material of Retainer". In this step, clicking "Selection of Model and Material of Retainer" on the "Precautions on Bearing Selection" screen shown in Fig. 12 causes a menu screen to appear which includes items such as rotational speed, acoustics, vibration and shock, moment load, and lubrication method. On the menu screen, each of the items is displayed to be checked against the condition provided by the customer, thereby allowing the customer to select the model and material of the retainer.

In the flowchart of Fig. 13, step S7 is "Selection of Lubrication method, Lubricant, and Sealing Method". In this step, clicking "Selection of Lubrication method, Lubricant, and Sealing Method" on the "Precautions on Bearing Selection" screen shown in Fig. 12 causes a menu screen to appear which includes items such as service temperature, rotational speed, lubrication method, sealing method, and maintenance and inspection. On the menu screen, each of the items is displayed to be checked against the condition provided by the customer, thereby allowing the customer to select a lubrication method and so forth.

In the flowchart of Fig. 13, step S8 is "Selection of Special Specification of Bearing". In this step, clicking "Selection of Special Specification of Bearing" on the "Precautions on Bearing Selection" screen shown in Fig. 12 causes a menu screen to appear which includes items such as service environments (such as high and low temperatures, vacuum, and chemical), and high reliability. On the menu screen, each of the items is displayed to be checked against the condition provided by the customer, thereby allowing the customer to select special specifications. For standard bearings having internationally standardized main sizes and models, it is possible to procure compatible products easily and economically all over the world. Accordingly, it is desirable to design machines and devices using standard bearings. However, depending on the property and application of the machine and the function required of the bearing, it may be desirable to employ special bearings that are different from the standard sizes and models. Special bearings also include an application-specific bearing and a unit bearing having part of a machine or device integrated with the bearing.

In the flowchart of Fig. 13, the last step S9 is "Check on Handling Method". In this step, clicking "Check on Handling Method" on the "Precautions on Bearing Selection" screen shown in Fig. 12 causes a menu screen to appear which includes each of the mounting-related size and the procedures of assembly and disassembly. On the menu screen, each of the items is displayed to allow the customer to check to see if the bearing can be actually used for mounting under the condition provided by the customer.

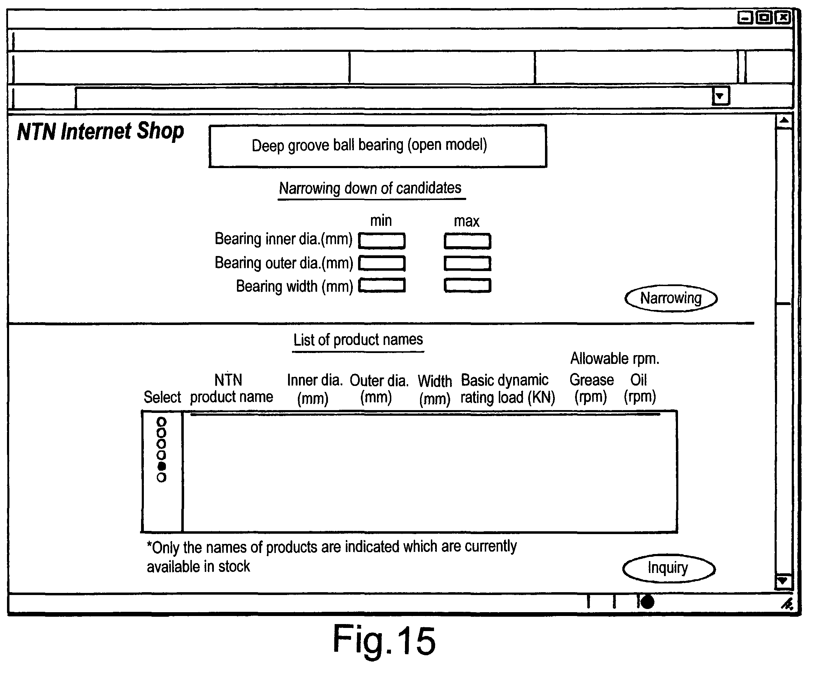

When all questions have been answered and bearings that should be selected have been determined through the foregoing procedure, the bearings are narrowed down to effect the customer's purpose back on the illustrated "Bearing Selection". Fig. 15 illustrates a screen to be displayed when the deep groove ball bearing (open model) has been selected, where the customer can decide the desired one from among the candidates displayed on the screen in accordance with the size and rating load. In the case where questions have not been answered, the customer is expected to check technical specifications in the technical FAQ list as shown in Fig. 16. When no answer has been found in the FAQ list, the customer is supposed to click on the "Q&A" on the screen of Fig. 9 and then send a new technical consultation by E-mail, finally selecting a bearing in accordance with the reply provided by the sales engineer of the supplier 1 by E-mail.

According to the first aspect of the invention, a purchaser who has accessed to the home page of a maker is provided with technical information useful for selecting a mechanical component and informed of a sales agency for dealing the mechanical component at the same time. This allows the provision of technical information to be directly connected to winning an order for mechanical components, thus making it possible to promote the sales activity of sales agencies through maker's support of agencies. This serves to make full use of current marketing channels and thereby makes it possible to provide more business opportunities in the commercial market. On the other hand, a nationwide sales agency network is introduced to purchasers and thereby services are provided for the purchaser in closer touch with the region. In addition, purchasing mechanical components of this type usually involves consultations on their selection. The present invention provides technical information useful for the selection, thereby making it possible for the purchaser to select desired mechanical components on the spot. This facilitates the selection of mechanical components and gives purchasers an introduction to a sales agency, thereby making it possible for the purchaser to purchase mechanical components without going through complicated procedures. According to the second aspect of the invention, the purchaser can select a desired sales agency from among a plurality of sales agencies introduced. On the other hand, according to the third aspect of the invention, the supplier can select a sales agency and then introduce the sales agency to the purchaser.

According to the fourth aspect of the invention, the home page of a supplier is provided with means for receiving inquiries on mechanical components from purchasers to distribute the contents of the inquiries to appropriate sales agencies. Thereby, simple access to the home page of the supplier can directly lead to placing an order with the sales agency, thereby saving labors for both the purchaser and the sales agency.

According to the fifth aspect of the present invention, customers can directly send technical inquiries for selecting mechanical components to a responsible engineer of a maker by E-mail. This enables the customer to promptly obtain the most appropriate technical information, thus improving services for customers and accelerating sale promotion more than ever.

According to the sixth aspect of the invention, specifically shown is means for introducing the sales agencies on the home page of a supplier to purchasers. This allows the purchaser, who has selected a mechanical component based on the technical information provided, to make an inquiry to or place an order with the sales agency.

According to the seventh aspect of the invention, mechanical components are delivered after payment has been made. This can save time for providing credit and enables prompt delivery.

According to the eighth aspect of the invention, since an ID is issued to a customer in accordance with background checks on the customer, both repeat customers and sales agencies can save time and labor.

According to the ninth aspect of the invention, registration is made to a customer database and an order potential database when a purchaser has made an inquiry. This makes it possible for the sales agency to control customers and appropriately receive orders. This also allows the supplier to have all pieces of customer information, thereby making it possible to provide more exacting services for customers in accordance with purchase history of each customer or the like.

While there has been described what are at present considered to be preferred embodiments of the invention, it will be understood that various modifications may be made thereto, and it is intended that the appended claims cover all such modifications as fall within the true spirit and scope of the invention.

## Claims

1. A marketing support system for allowing a supplier, manufacturing and selling a mechanical component such as one having a rolling element and a sliding bearing, to support a sales activity of a sales agency selling said mechanical component, wherein
a supplier's communication device connected to an open network is provided with technical information service means for providing technical information required to select said mechanical component and sales agency introduction means for introducing a sales agency selling said mechanical component,
a sales agency's communication device connected to the open network is provided with order processing means for taking an order for the mechanical component from a purchaser and for electronically performing processing such as order acceptance, payment reclaim, and delivery, and
the purchaser gains access to the communication device of the supplier over the open network so that the purchaser can select and purchase the mechanical component.

2. The marketing support system for a mechanical component according to claim 1, wherein the purchaser selects a responsible sales agency.

3. The marketing support system for a mechanical component according to claim 1, wherein the supplier selects a responsible sales agency.

4. The marketing support system for a mechanical component according to claim 3, wherein
the communication device of the supplier is provided with means for receiving an inquiry for a mechanical component from the purchaser,
contents of the inquiry is distributed over the open network and thereby consigned to an appropriate sales agency determined in accordance with a region and a product number, and
the sales agency performs processing such as payment reclaim and delivery of the mechanical component.

5. The marketing support system for a mechanical component according to claim 1, wherein said technical information service means is provided with question reply means for receiving a technical question from the purchaser and allowing a responsible engineer of the supplier to send a reply to the question back to the purchaser.

6. The marketing support system for a mechanical component according to claim 1, wherein
said sales agency introduction means is to display a sales agency information list having display items of at least a sales agency name, a mechanical component to be handled, an address, and a place for contact.

7. The marketing support system for a mechanical component according to claim 1, wherein
the mechanical component is delivered after payment has been made.

8. The marketing support system for a mechanical component according to claim 1, wherein
an ID is issued for the inquiry from the purchaser when credit can be provided for the purchaser in accordance with background checks on the purchaser and the order from the purchaser is accepted in accordance with the ID.

9. The marketing support system for a mechanical component according to claim 1, wherein
the inquiry from the purchaser is registered to a customer database and an order potential database.
